# EUROPÄISCHE PATENTSCHRIFT

(11) **EP 3 109 006 B1**
(45) Veröffentlichungstag und Bekanntmachung des Hinweises auf die Patenterteilung: **01.01.2020**
(21) Anmeldenummer: 16173477.7
(22) Anmeldetag: 08.06.2016
(51) Int. Cl.: B25F 5/00, B24B 23/02

(54) **ELEKTRISCHES WERKZEUG, INSBESONDERE WINKELSCHLEIFER, MIT IN EIN TÜLLENHALTEELEMENT INTEGRIERTEM FILTER**
ELECTRIC TOOL, ESPECIALLY AN ANGLE GRINDER, WITH FILTER INTEGRATED IN A CABLE HOLDER ELEMENT
OUTIL ELECTRIQUE, EN PARTICULIER MEULEUSE D'ANGLE, COMPRENANT UN FILTRE INTEGRE DANS UN ELEMENT DE RETENUE DE CABLE

(30) Priorität: 24.06.2015 DE 102015211646
(43) Veröffentlichungstag der Anmeldung: 28.12.2016
(73) Patentinhaber: ROBERT BOSCH GMBH, 70442 Stuttgart (DE)
(72) Erfinder: Maute, Joerg, 71069 Sindelfingen (DE); Stierle, Peter, 72124 Pliezhausen (DE); Lutz, Manfred, 70794 Filderstadt (DE)

(56) Entgegenhaltungen:
- EP-A1- 0 994 544
- EP-A1- 2 103 395
- EP-A2- 2 039 453
- DE-A1-102008 009 277
- DE-A1-102012 012 606
- DE-A1-102012 103 935
- DE-A1-102013 203 806

## Beschreibung

### Gebiet der Erfindung

Die Erfindung betrifft ein elektrisches Werkzeug wie z.B. einen Winkelschleifer. Insbesondere betrifft die Erfindung einen Staubschutz für ein solches Werkzeug.

### Stand der Technik

Elektrische Werkzeuge wie zum Beispiel Winkelschleifer, Stichsägen o.ä. weisen im Allgemeinen unter anderem einen Elektromotor sowie eine elektrische oder elektronische Steuerung zur gesteuerten Versorgung des Elektromotors mit elektrischer Leistung auf. Insbesondere bei handgeführten Elektrowerkzeugen, welche bei kompakter Bauform eine hohe Leistung abgeben sollen, sind diese Komponenten meist auf engem Raum in einem gemeinsamen Gehäuse untergebracht. Beispiele sind aus der DE102008009277A1, EP0994544A1, EP2103395A1 oder DE102012012606A1 bekannt.

Sowohl der Elektromotor als auch Komponenten der Steuerung stellen während des Betriebs des elektrischen Werkzeugs aufgrund von Verlustleistungen erhebliche Wärmequellen dar. Eine wichtige Rolle für eine Leistungsfähigkeit eines Elektrowerkzeugs spielt daher unter anderem eine ausreichende Kühlung solcher Wärmequellen. Typischerweise wird hierzu Umgebungsluft über einen Lüfter aktiv durch das die Komponenten umgebende Gehäuse hindurch gefördert. Der Lüfter kann beispielsweise auf einer Motorwelle des Elektromotors sitzen. Die eingeleitete Umgebungsluft wird dabei möglichst derart geführt, dass alle in dem Gehäuse befindlichen, als Wärmequellen wirkenden Komponenten im Kühlluftstrom liegen. Die Umgebungsluft wird hierzu beispielsweise über geeignete Einlassöffnungen in dem Gehäuse angesaugt und an anderer Stelle als erwärmte Abluft wieder durch Auslassöffnungen nach außen abgegeben.

Elektrische Werkzeuge werden häufig in rauer Umgebung eingesetzt. Angesaugte Kühlluft kann je nach Einsatzfall mit verschiedenen Materialpartikeln, wie zum Beispiel mineralischen oder metallischen Stäuben und Fasern, versetzt sein. Solche Materialpartikel können mit der Kühlluft in ein Inneres des Gehäuses des Werkzeugs angesaugt werden. Ablagerungen oder eine abrasive Wirkung solcher Materialpartikel können einen Betrieb des elektrischen Werkzeugs stören oder sogar zu Beschädigungen führen.

Beispielsweise können beim Schleifen mit einem Winkelschleifer entstehende metallische Stäube sich an Permanentmagneten des Elektromotors festsetzen und diese schlimmstenfalls beschädigen, indem beispielsweise ein freies Drehen eines Rotors relativ zu einem Stator behindert wird. Alternativ können Ablagerungen aus solchen metallischen Stäuben elektrisch leitende Pfade bilden, die eine elektrische Verbindung, und damit einen Kurzschluss, zwischen in dem Gehäuse aufgenommenen inneren elektrischen Komponenten und/oder eine elektrische Verbindung zwischen den inneren elektrischen Komponenten und einer Außenumgebung und damit ein Risiko unter Spannung stehender berührbarer Teile bewirken können.

Um ein Eindringen von Materialpartikeln zusammen mit angesaugter Kühlluft in das Werkzeuggehäuse zu vermeiden, werden Gehäuseöffnungen teilweise mit Filtern versehen. Solche Filter können als Zusatzteile vorgesehen sein und an dem Gehäuse befestigt werden, so dass sie optional verwendet und/oder bei Verschmutzung ausgetauscht werden können.

### Offenbarung der Erfindung

### Vorteile der Erfindung

Ausführungsformen der vorliegenden Erfindung können in vorteilhafter Weise ermöglichen, ein Eindringen von Materialpartikeln in ein Gehäuse eines elektrischen Werkzeugs durch ein vorteilhaft an dem Gehäuse befestigtes Filterelement zu vermeiden.

Gemäß einem Aspekt der Erfindung wird ein elektrisches Werkzeug, insbesondere in Form eines Winkelschleifers oder einer Stabstichsäge, vorgeschlagen, welches einen Elektromotor, ein längliches Gehäuse, in dem der Motor aufgenommen und gehalten ist, eine elektrische Leitung zum Zuführen elektrischer Leistung zu dem Motor, eine an dem Gehäuse befestigte und die elektrische Leitung umgebende Tülle sowie ein Tüllenhalteelement, welches die Tülle an dem Gehäuse befestigt, aufweist. An dem Werkzeug ist ferner ein Filterelement zum Filtern von durch Kühlluftöffnungen in ein Inneres des Gehäuses eingesaugter Kühlluft vorgesehen. Das Werkzeug zeichnet sich dadurch aus, dass die Kühlluftöffnungen in dem Tüllenhalteelement ausgebildet sind und das Filterelement an dem Tüllenhalteelement gehalten ist.

Ideen zu Ausführungsformen der vorliegenden Erfindung können unter anderem als auf den nachfolgend beschriebenen Gedanken und Erkenntnissen beruhend angesehen werden.

Es wurde erkannt, dass bei bisherigen elektrischen Maschinen zwar teilweise Filterelemente als Schutz vor eindringenden Materialpartikeln, d.h. als eine Art Staubfilter, vorgesehen sind, diese jedoch oft nicht von dem Gehäuse reversibel lösbar sind, um sie beispielsweise zu reinigen. Bei bekannten Lösungen, bei welchen vorgesehen ist, Filterelemente reversibel lösbar am Gehäuse anzubringen, werden meist strukturelle Maßnahmen an dem Gehäuse vorgesehen, die erhebliche Modifikationen des Gehäuses erfordern und zusätzliche Kosten generieren. Beispielsweise werden separat vorgesehene Halteelemente für die Filterelemente vorgesehen. Solche zusätzlich vorzusehenden strukturellen Maßnahmen können zu einem komplizierten Aufbau des Werkzeugs sowie zu gesteigerten Kosten führen. Des Weiteren bauen bekannte Lösungen, welche als zusätzliches Teil ans Gehäuse angebracht werden, nach außen auf und beeinträchtigen damit eine kompakte und ergonomische Bauweise.

Ferner wurde erkannt, dass insbesondere bei handgehaltenen elektrischen Werkzeugen ein Risiko besteht, dass Gehäuseöffnungen bzw. dort vorgesehene Filterelemente durch einen das Werkzeug haltenden Nutzer versehentlich beispielsweise mit einer Hand abgedeckt werden, sodass ein ausreichendes Ansaugen von Luft und damit eine ausreichende Kühlung nicht sichergestellt werden können.

Es wird daher vorgeschlagen, ein Filterelement an einem Gehäuse eines elektrischen Werkzeugs mithilfe eines ohnehin meist an dem Gehäuse vorgesehenen Tüllenhalteelementes zu fixieren.

Eine Tülle ist in der Regel ein schlauchartiges, flexibles Gebilde, welches eine die elektrische Maschine mit Elektrizität versorgende elektrische Leitung in einem Bereich angrenzend an das Gehäuse umgibt, um sie beispielsweise bei mechanischer Belastung vor einem scharfen Abknicken an Kanten des Gehäuses zu schützen. Die elektrische Leitung und somit auch die Tülle sind regelmäßig in einem Bereich des Gehäuses angeordnet, an dem die elektrische Maschine normalerweise nicht von der Hand eines Anwenders gehalten wird. Beispielsweise ist die Tülle bei einem stabförmigen Werkzeug mit einem länglichen Gehäuse, wie z.B. einem Winkelschleifer, meist an einem hintersten Bereich, insbesondere einer hinteren Stirnfläche, des Gehäuses vorgesehen.

Die Tülle wird an dem Gehäuse regelmäßig durch ein Tüllenhalteelement befestigt. Das Tüllenhalteelement hält die Tülle mittels beispielsweise einer formschlüssigen und/oder kraftschlüssigen Verbindung stabil an dem Gehäuse des Werkzeugs.

Insbesondere kann es vorteilhaft sein, das Tüllenhalteelement in einer reversibel lösbaren Art und Weise an dem Gehäuse zu befestigen. Beispielsweise kann das Tüllenhalteelement mithilfe einer oder mehrerer Schrauben, Schnappverschlüssen oder Ähnlichem an dem Gehäuse befestigt sein. Das Tüllenhalteelement kann somit, nachdem die Tülle geeignet positioniert worden ist, einfach an dem Gehäuse fixiert werden und dadurch auch die Tülle an dem Gehäuse befestigen. Bei Bedarf kann das Tüllenhalteelement, und damit auch die Tülle, wieder von dem Gehäuse gelöst werden, beispielsweise um die Tülle bei Beschädigung austauschen zu können.

Das ohnehin an dem elektrischen Werkzeug vorzusehende Tüllenhalteelement soll nun eine weitere Funktion dahingehend erhalten, dass es nicht nur die Tülle hält, sondern auch dazu genutzt wird, für eine Eintrittsmöglichkeit von gefilterter Umgebungsluft in das Gehäuse zu sorgen. Mit anderen Worten kann das Tüllenhalteelement eine Doppelfunktion zum Halten der Tülle einerseits und zum Einlassen von Kühlluft und Halten des Filterelements andererseits übernehmen. Ergänzend kann dem Tüllenhalteelement eine weitere Funktion zum Halten eines Gehäusedeckels zukommen.

Hierzu wird das Tüllenhalteelement mit Kühlluftöffnungen versehen, durch die Umgebungsluft von außen kommend nach innen in das Gehäuse der Werkzeugmaschine strömen kann. Ferner dient das Tüllenhalteelement dazu, das Filterelement zu halten und es somit relativ zu dem Gehäuse zu fixieren. Das Filterelement kann dabei derart an dem Tüllenhalteelement gehalten sein, dass es die Kühlluftöffnungen zumindest teilweise oder vorzugsweise vollständig abdeckt, sodass in das Gehäuseinnere eingesogene Kühlluft durch das Filterelement strömen muss und dabei gefiltert wird.

Das Tüllenhalteelement kann als einstückiges oder mehrstückiges separates Bauteil vorgesehen sein.

Insbesondere als einstückiges Bauteil kann das Tüllenhalteelement besonders einfach gefertigt werden, beispielsweise als Kunststoffbauteil im Spritzgussverfahren. Ein Endbereich der Tülle kann dann zwischen dem Tüllenhalteelement und dem Gehäuse formschlüssig aufgenommen und gehalten sein.

Das Tüllenhalteelement und mit ihm die Tülle sowie das Filterelement können insbesondere bei einem einstückigen Aufbau des Tüllenhalteelementes sehr einfach an dem Gehäuse des Werkzeugs befestigt werden. Beispielsweise kann das Tüllenhalteelement mittels lediglich eines einzigen Befestigungselements reversibel lösbar an dem Gehäuse befestigt werden. Als Befestigungselement kann beispielsweise eine einzelne Schraube, ein einzelner Schnappverschluss, eine einzelne Splintverbindung oder Ähnliches dienen.

Alternativ kann das Tüllenhalteelement zwei- oder mehrstückig ausgebildet sein und ein Endbereich der Tülle zwischen zwei Stücken des Tüllenhalteelementes formschlüssig aufgenommen und gehalten sein. Durch einen zwei- oder mehrstückigen Aufbau kann das Tüllenhalteelement meist größer bzw. großflächiger sein als mit einem einstückigen Aufbau und somit eine größere Fläche für mögliche Kühlluftöffnungen bereitstellen.

Das Filterelement kann in das Tüllenhalteelement nicht reversibel lösbar, d.h. fest, integriert sein. Anders ausgedrückt kann das Filterelement einen festen Bestandteil des Tüllenhalteelementes bilden und mit diesem unlösbar verbunden sein. Beispielsweise kann das Filterelement in ein als Spritzgussteil ausgebildetes Tüllenhalteelement eingegossen sein. Das Tüllenhalteelement kann dadurch zusammen mit dem Filterelement einfach gehandhabt und an dem Gehäuse des Werkzeuges befestigt werden.

Alternativ kann das Filterelement an dem Tüllenhalteelement reversibel lösbar gehalten sein. Beispielsweise kann das Filterelement als separates Bauteil an dem Tüllenhalteelement gehalten sein und bei Bedarf, beispielsweise um es auszutauschen, von diesem gelöst werden. Das Filterelement kann beispielsweise an einer zum Inneren des Gehäuses gerichteten Oberfläche des Tüllenhalteelementes befestigt sein, beispielsweise mithilfe eines Klettverschlusses, durch Klemmen, mit einem anschraubbaren Rahmen oder Ähnlichem.

In beiden Fällen kann das Filterelement auf verschiedene Weisen ausgebildet sein. Beispielsweise kann das Filterelement ein Gitter, beispielsweise ein Metallgitter, Kunststoffgitter oder Kohlefasergitter, sein. Alternativ kann das Filterelement ein Vlies oder ein Gewebe sein. Das Filterelement kann als separates Bauteil bereitgestellt sein und beispielsweise selbsttragend sein und somit als eigenständiges Bauteil gehandhabt und beispielsweise ausgetauscht werden. Alternativ kann das Filterelement einen fest integrierten Bestandteil des Tüllenhalteelementes bilden, sodass für den Fall, dass das Filterelement gewechselt werden soll, das gesamte, einfach montier- und lösbare Tüllenhalteelement gewechselt wird.

Das Tüllenhalteelement kann derart ausgestaltet sein und an dem Gehäuse des Werkzeugs befestigt sein, dass es einen in Längsrichtung nach hinten offenen Teilbereich des länglichen Gehäuses abdeckt. Anders ausgedrückt kann das Tüllenhalteelement derart ausgestaltet sein, dass es lediglich eine hintere Stirnfläche bzw. Teile einer hinteren Stirnfläche des Werkzeuggehäuses abdeckt. Da das Tüllenhalteelement die Kühllufteinlassöffnungen bereitstellt und auch das Filterelement hält, ist ein Einströmen von Kühlluft in das Gehäuse somit lediglich im Bereich der hinteren Stirnfläche des Gehäuses möglich. Da dieser Bereich im Regelfall von einem Anwender nicht mit der Hand abgedeckt wird, ist ein Risiko, dass ein Kühlluftzustrom behindert wird, minimal.

Alternativ oder ergänzend kann das Tüllenhalteelement derart ausgestaltet sein, dass es einen quer zu einer Längsrichtung nach außen offenen Mantelteilbereich des Gehäuses abdeckt. Anders ausgedrückt kann das Tüllenhalteelement einen Teilbereich des Gehäuses abdecken, der sich nicht oder nicht nur an einer hinteren Stirnfläche des Gehäuses befindet sondern sich an einer seitlichen Mantelfläche des Gehäuses erstreckt. Eine Gesamtfläche des Tüllenhalteelementes kann somit größer als eine hintere Stirnfläche des Werkzeuggehäuses sein, sodass das Tüllenhalteelement großflächigere Kühlluftöffnungen bereitstellen kann und eine Kühlung des Werkzeuges somit verbessert werden kann.

Es wird darauf hingewiesen, dass einige der möglichen Merkmale und Vorteile der Erfindung hierin mit Bezug auf unterschiedliche Ausführungsformen, insbesondere unterschiedliche Ausgestaltungen von Tüllenhalteelementen und/oder Filterelementen, beschrieben sind. Ein Fachmann erkennt, dass die Merkmale in geeigneter Weise kombiniert, angepasst oder ausgetauscht werden können, um zu weiteren Ausführungsformen der Erfindung zu gelangen.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt eine Seitenansicht eines elektrischen Werkzeugs gemäß einer Ausführungsform der Erfindung.
Fig. 2 zeigt eine Schnittansicht durch das Werkzeug aus Fig. 1.
Fig. 3 zeigt eine perspektivische Ansicht auf ein hinteres Ende des Werkzeugs aus Fig. 1.
Fig. 4 zeigt eine Seitenansicht eines elektrischen Werkzeugs gemäß einer alternativen Ausführungsform der Erfindung.
Fig. 5 zeigt eine perspektivische Ansicht auf ein hinteres Ende des Werkzeugs aus Fig. 4.
Fig. 6 zeigt eine perspektivische Ansicht auf ein hinteres Ende eines Werkzeugs gemäß einer weiteren alternativen Ausführungsform der Erfindung.
Fig. 7 zeigt eine perspektivische Ansicht auf ein hinteres Ende eines Werkzeugs gemäß noch einer weiteren alternativen Ausführungsform der Erfindung.

Die Figuren sind lediglich schematisch und nicht maßstabsgetreu. Gleiche Bezugszeichen bezeichnen in den Figuren gleiche oder gleichwirkende Merkmale.

### Ausführungsformen der Erfindung

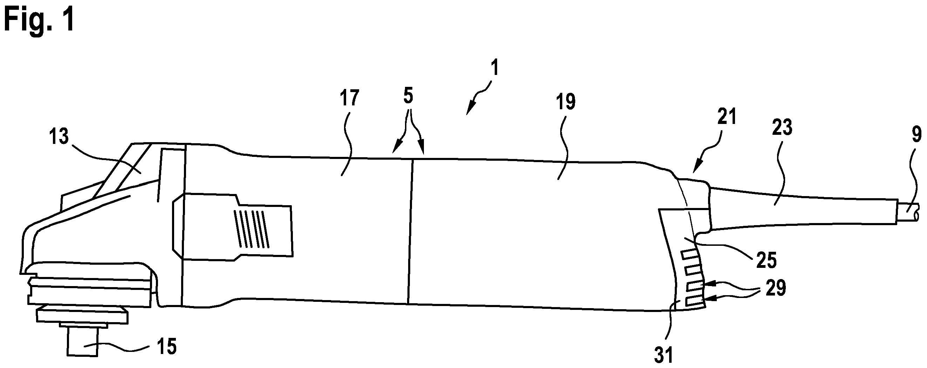

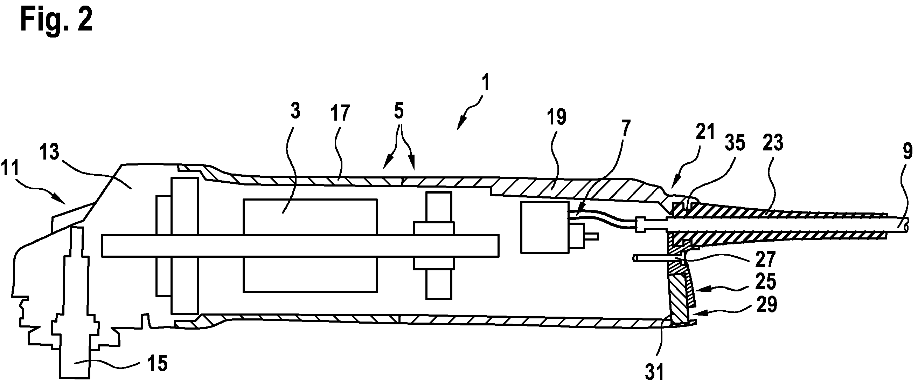

Fign. 1 bis 3 zeigen verschiedene Ansichten eines elektrischen Werkzeugs 1 in Form eines Winkelschleifers gemäß einer Ausführungsform der vorliegenden Erfindung.

Das Werkzeug 1 weist ein längliches, stabförmiges Gehäuse 5 auf, in dem ein Elektromotor 3 aufgenommen ist. Der Elektromotor 3 treibt über ein in einem Werkzeugkopf 13 aufgenommenes Getriebe 11 eine Welle 15 an, an der eine Werkzeugkomponente wie beispielsweise eine Trenn- oder Schleifscheibe (nicht dargestellt) angeordnet werden kann.

Ferner ist in dem Gehäuse 5 eine elektrische Steuerung 7aufgenommen. Die Steuerung kann beispielsweise einen Schalter und/oder eine Elektronik umfassen. Diese Steuerung 7 erhält über eine elektrische Leitung 9 elektrische Leistung von einer äußeren elektrischen Stromquelle und gibt diese gesteuert und gegebenenfalls transformiert an den Elektromotor 3 weiter. Gegebenenfalls kann die Steuerung 7 auch ein Gleich- oder Wechselrichten einer über die Leitung 9 zugeführten elektrischen Leistung übernehmen.

Im dargestellten Beispiel ist das Gehäuse 5 zweiteilig aufgebaut. Ein dem Werkzeugkopf 13 näher liegender, vorderer Bereich ist als Motorgehäuse 17 ausgebildet. In dem Motorgehäuse 17 ist der Elektromotor 3 aufgenommen und gehalten. Ein näher zur elektrischen Leitung 9 gelegener hinterer Bereich dient als Gehäusedeckel 19 und nimmt unter anderem die Steuerung 7 auf. Alternativ kann der Gehäusedeckel 19 rein als Abdeckung für unter ihm befindliche elektronische Komponenten wie Innere Leitungen und Anschlüsse, Elektronik, Schalter, Kohlebürsten, etc. vorgesehen sein. Das Motorgehäuse 17 und der Gehäusedeckel 19 sind fest miteinander verbunden und bilden zusammen das Gehäuse 5. Ein zweiteiliger Aufbau des Gehäuses 5 kann unter anderem einen Zusammenbau der Komponenten des Werkzeugs erleichtern.

An einem hinteren Ende 21 des Gehäuses 5 verläuft die elektrische Leitung 9 von außen kommend in das Gehäuse 5 hinein. Um die Leitung 9 hierbei vor Beschädigungen, insbesondere durch ein Abknicken oder durch ein Scheuern an Kanten des Gehäuses zu schützen, ist die Leitung 9 in diesem Bereich von einer Tülle 23 umgeben. Die röhrenförmige Tülle 23 besteht aus einem elastischen, flexiblen Material wie beispielsweise Gummi, Silikon oder Kautschuk.

Um die Tülle 23 an dem Gehäuse 5 zu befestigen, ist ein Tüllenhalteelement 25 vorgesehen. Das Tüllenhalteelement 25 ist eine separate Komponente und kann vorzugsweise einfach an dem Gehäuse 5 befestigt und wieder reversibel von diesem gelöst werden. Auf diese Weise kann die Tülle 23 montiert und gegebenenfalls ausgetauscht werden.

Das Tüllenhalteelement 25 dient ergänzend auch dazu, ein Einsaugen von Kühlluft in ein Inneres des Gehäuses 5 zu ermöglichen. Hierzu weist das Tüllenhalteelement 25 mehrere Kühlluftöffnungen 29 auf. Die Kühlluftöffnungen 29 reichen als Durchgangslöcher durch das Tüllenhalteelement 25 hindurch und münden vorzugsweise in zugehörige Öffnungen des Gehäuses 5 bzw. in einen Bereich, in dem das Gehäuse 5 nicht geschlossen ist. Durch die Kühlluftöffnungen 29 kann somit Umgebungsluft ins Innere des Gehäuses 5 eingesogen werden, dort an wärmeerzeugenden Komponenten wie dem Elektromotor 3 und der Steuerung 7 vorbeiströmen und diese dabei kühlen und letztendlich über Öffnungen z.B. im Bereich des Werkzeugkopfes 13 wieder nach außen austreten.

Um eingesogene Kühlluft zu reinigen und zu vermeiden, dass darin enthaltene Materialpartikel ins Innere des Gehäuses 5 eindringen können, ist ferner an dem Tüllenhalteelement 25 ein Filterelement 31 oder mehrere Filterelemente 31 gehalten. Das Filterelement 31 kann beispielsweise eine Art Metall- oder Kunststoffsieb sein, dessen Löcher oder Poren klein genug sind, um in eingesogener Kühlluft enthaltene Partikel am Durchströmen zu hindern. Alternativ kann das Filterelement 31 z.B. ein entsprechendes Vlies, Gewirke oder Gewebe sein. Das Filterelement 31 kann an einer zum Inneren des Gehäuses 5 gerichteten Oberfläche des Tüllenhalteelementes 25 angeordnet sein. Beispielsweise kann das Filterelement 31 in ein als Spritzgussteil ausgebildetes Tüllenhalteelement 25 eingegossen sein. Alternativ kann das Filterelement 31 an das Tüllenhalteelement 25 beispielsweise angeklettet oder angeklebt sein oder zwischen diesem und einem angrenzenden Bereich des Gehäuses 5 klemmend gehalten sein. Weiterhin möglich ist eine Befestigung durch Heißprägen, Ultraschallschweißen oder ähnliches.

Das Filterelement 31 ist dabei vorzugsweise so ausgestaltet und angeordnet, dass es zugehörige Kühlluftöffnungen 29 zumindest teilweise, vorzugsweise jedoch vollständig, überdeckt. Durch die Kühlluftöffnungen 29 in das Gehäuse 5 eingesogene Kühlluft muss somit zumindest teilweise durch das Filterelement 31 passieren, wobei darin mitgeführte Partikel herausgefiltert und damit an einem Eindringen gehindert werden.

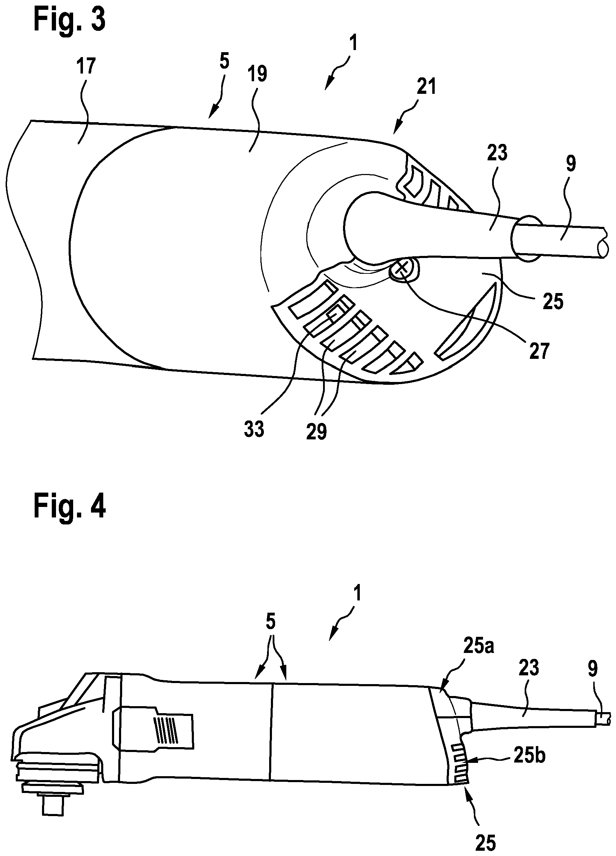

Es wird darauf hingewiesen, dass in Fig. 3 kein Filterelement 31 dargestellt ist, um eine Mündung der Kühlluftöffnungen 29 in Öffnungen 33 des Gehäuses 5 veranschaulichen zu können.

Bei der in den Fign. 1 bis 3 dargestellten Ausführungsform ist das Tüllenhalteelement 25 als einstückiges, beispielsweise spritzgegossenes Kunststoffbauteil ausgebildet, welches über ein einziges Befestigungselement 27 in Form einer Schraube an dem Gehäuse 5 reversibel lösbar befestigt werden kann. Ein Endbereich 35 der Tülle 23 ist formschlüssig zwischen dem Tüllenhalteelement 25 und einem Rand des Gehäuses 5 aufgenommen und dadurch an dem Gehäuse 5 gehalten. Die Tülle 23 weist hierfür geeignete Hinterschneidungen auf, in die Rippen an dem Gehäuse 5 bzw. an dem Tüllenhalteelement 25 eingreifen.

Das Tüllenhalteelement 25 deckt dabei lediglich einen in Längsrichtung nach hinten zumindest teilweise über die Öffnungen 33 offenen Teilbereich des Gehäuses 5 ab. Kühlluft kann in diesem Fall nur weitestgehend parallel zur Längsrichtung des länglichen Gehäuses 5 eingesogen werden. Das Tüllenhalteelement 25 ist in diesem Fall besonders einfach ausgestaltet und kann daher kostengünstig bereitgestellt und einfach montiert werden.

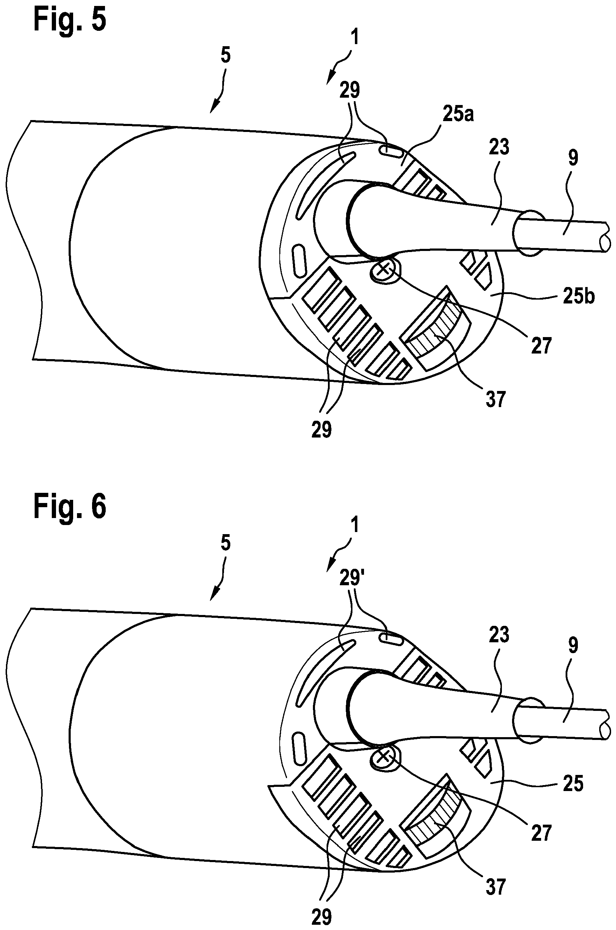

Bei der in den Figuren 4 und 5 dargestellten Ausführungsform ist das Tüllenhalteelement 25 zweistückig ausgestaltet. Beide Teile 25a und 25b können beispielsweise Kunststoffbauteile sein, welche einfach spritzgegossen werden können. Die beiden Teile 25a, 25b können derart zusammenwirkend ausgestaltet sein, dass sie zwischen sich die Tülle 23 formschlüssig aufnehmen können und diese auf diese Weise an dem Gehäuse 5 befestigen können. Das zweistückige Tüllenhalteelement 25 kann wiederum reversibel lösbar an dem Gehäuse 5 befestigt sein, wobei bei geeigneter Ausgestaltung eine einzige Schraube als Befestigungselement 27 genügen kann. In beiden Teilen 25a, 25b des Tüllenhalteelementes 25 sind Kühlluftöffnungen 29 sowie zugehörige Filterelemente 31 (nicht dargestellt) vorgesehen, sodass insgesamt eine von Kühlluftöffnungen 29 überdeckte Fläche größer ist als in dem in den Fig. 1 bis 3 dargestellten Beispiel und somit mehr Kühlluft gefiltert und eingesaugt werden kann.

In dem unteren Teil 25b des Tüllenhalteelementes 25 ist ferner eine Öffnung vorgesehen, über die ein Stellrad 37 zugänglich ist und bedient werden kann, mithilfe dessen beispielsweise eine von der Steuerung zuzuführende elektrische Leistung vorgegeben werden kann.

Fig. 6 zeigt eine Ausführungsform eines Werkzeugs 1, bei dem das Tüllenhalteelement 25 ähnlich wie bei der in den Fign. 1 bis 3 dargestellten Ausführungsform lediglich einstückig ist. Allerdings sind in diesem Fall nicht nur in dem Tüllenhalteelement 25 sondern auch in benachbarten Bereichen des Gehäuses 5, insbesondere in dessen nach hinten gerichteter Stirnfläche, Kühlluftöffnungen 29' vorgesehen. Ein in dem Tüllenhalteelement 25 gehaltenes Filterelement (nicht dargestellt) kann bis in Bereiche angrenzend an die in dem Gehäuse 5 vorgesehenen Kühlluftöffnungen 29' reichen. Insgesamt kann dadurch mehr Kühlluft eingesogen werden. Das Filterelement kann zusammen mit dem Tüllenhalteelement 25 einfach montiert, entfernt oder gewechselt werden.

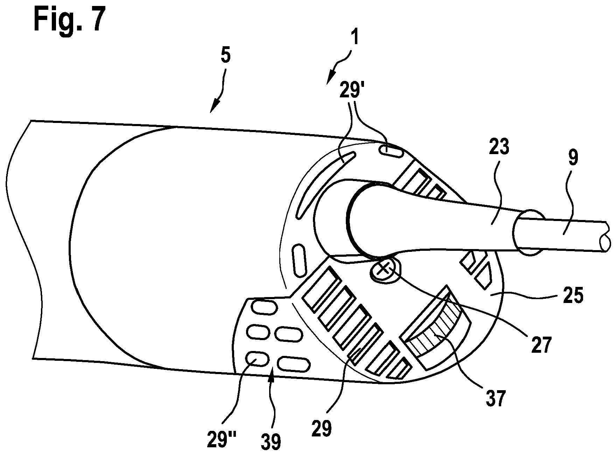

Fig. 7 zeigt eine weitere alternative Ausführungsform eines Werkzeugs 1, bei dem ein Tüllenhalteelement 25 nicht nur eine nach hinten gerichtete Stirnfläche des Gehäuses 5 teilweise abdeckt, sondern zusätzlich auch bis in seitliche Bereiche des Gehäuses 5 reicht und dort einen quer zur Längsrichtung des Werkzeugs 1 nach außen offenen Mantelbereich 39 des Gehäuses 5 abdeckt. In diesem weiter nach vorne gezogenen Teilbereich weist das Tüllenhalteelement 25 zusätzliche Kühlluftöffnungen 29" auf, sodass mehr Kühlluft in das Innere des Gehäuses 5 gesogen werden kann. Varianten einer solchen Ausführungsform können auch mit den Merkmalen der in den Fign. 1 bis 6 dargestellten Ausführungsformen kombiniert werden.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Elektrisches Werkzeug (1), aufweisend:
einen Elektromotor (3);
ein längliches Gehäuse (5), in dem der Motor (3) aufgenommen und gehalten ist;
eine elektrische Leitung (9) zum Zuführen elektrischer Leistung zu dem Motor (3);
eine an dem Gehäuse (5) befestigte und die elektrische Leitung (9) umgebende Tülle (23);
ein Tüllenhalteelement (25), welches die Tülle (23) an dem Gehäuse (5) befestigt;
ein Filterelement (31) zum Filtern von durch Kühlluftöffnungen (29) in ein Inneres des Gehäuses (5) eingesaugter Kühlluft;
**dadurch gekennzeichnet, dass**
die Kühlluftöffnungen (29) in dem Tüllenhalteelement (25) ausgebildet sind und das Filterelement (31) an dem Tüllenhalteelement (25) gehalten ist,
wobei das Tüllenhalteelement (25) derart ausgestaltet ist und an dem Gehäuse (5) befestigt ist, dass das Tüllenhalteelement (25) einen in Längsrichtung nach hinten offenen Teilbereich des länglichen Gehäuses (5) derart abdeckt, dass ein Einströmen von Kühlluft in das Gehäuse (5) im Bereich einer hinteren Stirnfläche des Gehäuses (5) ermöglicht wird.

2. Werkzeug nach Anspruch 1, wobei das Tüllenhalteelement (25) an dem Gehäuse (5) reversibel lösbar befestigt ist.

3. Werkzeug nach Anspruch 1 oder 2, wobei das Tüllenhalteelement (25) einstückig ist.

4. Werkzeug nach einem der Ansprüche 1 bis 3, wobei ein Endbereich (35) der Tülle (23) zwischen dem Tüllenhalteelement (25) und dem Gehäuse (5) formschlüssig aufgenommen und gehalten ist.

5. Werkzeug nach Anspruch 1 oder 2, wobei das Tüllenhalteelement (25) wenigstens zweistückig ist und wobei ein Endbereich (35) der Tülle (23) zwischen zwei Stücken des Tüllenhalteelementes (25) formschlüssig aufgenommen und gehalten ist.

6. Werkzeug nach einem der vorangehenden Ansprüche, wobei das Filterelement (31) in das Tüllenhalteelement (25) nicht reversibel lösbar integriert ist

7. Werkzeug nach einem der Ansprüche 1 bis 5, wobei das Filterelement (31) an dem Tüllenhalteelement (25) reversibel lösbar gehalten ist.

8. Werkzeug nach einem der vorangehenden Ansprüche, wobei das Tüllenhalteelement (25) einen in Längsrichtung nach hinten offenen Teilbereich des länglichen Gehäuses (5) abdeckt.

9. Werkzeug nach einem der vorangehenden Ansprüche, wobei das Tüllenhalteelement (25) einen quer zu einer Längsrichtung nach außen offenen Mantelteilbereich (39) des Gehäuses (5) abdeckt.

10. Werkzeug nach einem der vorangehenden Ansprüche, wobei das Tüllenhalteelement (25) mittels lediglich eines Befestigungselements (27) reversibel lösbar an dem Gehäuse (5) befestigt ist.

11. Werkzeug nach einem der vorangehenden Ansprüche, wobei das Werkzeug (1) ein Winkelschleifer oder eine Stabstichsäge ist.

## Claims

1. Electric tool (1) having
an electric motor (3);
an elongate housing (5) in which the motor (3) is accommodated and held;
an electric line (9) for supplying electrical power to the motor (3);
a bushing (23) fastened to the housing (5) and surrounding the electric line (9);
a bushing holding element (25) that fastens the bushing (23) to the housing (5);
a filter element (31) for filtering cooling air drawn into an interior of the housing (5) by cooling-air openings (29);
**characterized in that**
the cooling-air openings (29) are formed in the bushing holding element (25) and the filter element (31) is held on the bushing holding element (25),
wherein the bushing holding element (25) is configured and fastened to the housing (5) such that the bushing holding element (25) covers a subregion of the elongate housing (5) that is open towards the rear in the longitudinal direction such that cooling air is allowed to flow into the housing (5) in the region of a rear end face of the housing (5).

2. Tool according to Claim 1, wherein the bushing holding element (25) is fastened to the housing (5) in a reversibly detachable manner.

3. Tool according to Claim 1 or 2, wherein the bushing holding element (25) is in one piece.

4. Tool according to one of Claims 1 to 3, wherein an end region (35) of the bushing (23) is received and held in a form-fitting manner between the bushing holding element (25) and the housing (5).

5. Tool according to Claim 1 or 2, wherein the bushing holding element (25) is at least in two pieces and wherein an end region (35) of the bushing (23) is received and held in a form-fitting manner between two pieces of the bushing holding element (25).

6. Tool according to one of the preceding claims, wherein the filter element (31) is integrated into the bushing holding element (25) in a non-reversibly detachable manner.

7. Tool according to one of Claims 1 to 5, wherein the filter element (31) is held on the bushing holding element (25) in a reversibly detachable manner.

8. Tool according to one of the preceding claims, wherein the bushing holding element (25) covers a subregion of the elongate housing (5) that is open towards the rear in the longitudinal direction.

9. Tool according to one of the preceding claims, wherein the bushing holding element (25) covers a casing subregion (39) of the housing (5) that is open towards the outside transversely to a longitudinal direction.

10. Tool according to one of the preceding claims, wherein the bushing holding element (25) is fastened to the housing (5) in a reversibly detachable manner by means of only one fastening element (27).

11. Tool according to one of the preceding claims, wherein the tool (1) is an angle grinder or a barrel jigsaw.

## Revendications

1. Outil électrique (1), présentant :
un moteur électrique (3) ;
un boîtier allongé (5) dans lequel le moteur (3) est reçu et retenu ;
une ligne électrique (9) pour l'alimentation du moteur (3) en puissance électrique ;
un manchon (23) fixé au boîtier (5) et entourant la ligne électrique (9) ;
un élément de retenue de manchon (25) qui fixe le manchon (23) au boîtier (5) ;
un élément de filtre (31) pour filtrer l'air de refroidissement aspiré à travers des ouvertures d'air de refroidissement (29) à l'intérieur du boîtier (5) ;
**caractérisé en ce que**
les ouvertures d'air de refroidissement (29) sont réalisées dans l'élément de retenue de manchon (25) et l'élément de filtre (31) est retenu au niveau de l'élément de retenue de manchon (25), l'élément de retenue de manchon (25) étant réalisé et fixé au boîtier (5) de telle sorte que l'élément de retenue de manchon (25) recouvre une région partielle du boîtier allongé (5) ouverte vers l'arrière dans la direction longitudinale de telle sorte qu'un un flux d'air de refroidissement dans le boîtier (5), dans la région d'une surface frontale arrière du boîtier (5), soit possible.

2. Outil selon la revendication 1, dans lequel l'élément de retenue de manchon (25) est fixé de manière amovible et réversible au niveau du boîtier (5).

3. Outil selon la revendication 1 ou 2, dans lequel l'élément de retenue de manchon (25) est réalisé d'une seule pièce.

4. Outil selon l'une quelconque des revendications 1 à 3, dans lequel une région d'extrémité (35) du manchon (23) est reçue et retenue par engagement par correspondance de formes entre l'élément de retenue de manchon (25) et le boîtier (5).

5. Outil selon la revendication 1 ou 2, dans lequel l'élément de retenue de manchon (25) est réalisé au moins en deux parties et dans lequel une région d'extrémité (35) du manchon (23) est reçue et retenue par engagement par correspondance de formes entre deux pièces de l'élément de retenue de manchon (25).

6. Outil selon l'une quelconque des revendications précédentes, dans lequel l'élément de filtre (31) est intégré de manière amovible et non réversible dans l'élément de retenue de manchon (25).

7. Outil selon l'une quelconque des revendications 1 à 5, dans lequel l'élément de filtre (31) est retenu de manière amovible et réversible au niveau de l'élément de retenue de manchon (25).

8. Outil selon l'une quelconque des revendications précédentes, dans lequel l'élément de retenue de manchon (25) recouvre une région partielle du boîtier allongé (5), ouverte vers l'arrière dans la direction longitudinale.

9. Outil selon l'une quelconque des revendications précédentes, dans lequel l'élément de retenue de manchon (25) recouvre une région partielle d'enveloppe (39) du boîtier (5), ouverte vers l'extérieur transversalement à une direction longitudinale.

10. Outil selon l'une quelconque des revendications précédentes, dans lequel l'élément de retenue de manchon (25) est fixé de manière amovible et réversible au niveau du boîtier (5) au moyen de seulement un élément de fixation (27).

11. Outil selon l'une quelconque des revendications précédentes, dans lequel l'outil (1) est une meuleuse d'angle ou une scie sauteuse à barre.
